# EUROPEAN PATENT APPLICATION

(11) **EP 3 457 804 A1**
(43) Date of publication of application: **20.03.2019**
(21) Application number: 17796206.5
(22) Date of filing: 11.05.2017
(51) Int. Cl.: H04W 74/08, H04W 72/12

(54) **USER TERMINAL AND WIRELESS COMMUNICATION METHOD**

(30) Priority: 12.05.2016 JP 2016096437
(71) Applicant: NTT DOCOMO, INC., Chiyoda-ku Tokyo 100-6150 (JP)
(72) Inventor: TAKEDA, Kazuaki, Tokyo 100-6150 (JP); SANO, Yousuke, Tokyo 100-6150 (JP); TAKEDA, Kazuki, Tokyo 100-6150 (JP); NAGATA, Satoshi, Tokyo 100-6150 (JP)
(74) Representative: Hoffmann Eitle
(86) International application number: PCT/JP2017/017771
(87) International publication number: WO 2017/195848

(57) **Abstract**

The present invention is designed to adequately control resource regions for contention-based UL transmission. A user terminal, according to the present invention, has a transmission section that transmits UL data without an uplink (UL) grant from a radio base station, and a control section that controls transmission of the UL data, and the control section configures a plurality of resource regions with varying parameters, and selects a resource region to use to transmit the UL data from among the plurality of resource regions.

## Description

### Technical Field

The present invention relates to a user terminal and a radio communication method in next-generation mobile communication systems.

### Background Art

In the UMTS (Universal Mobile Telecommunications System) network, the specifications of long-term evolution (LTE) have been drafted for the purpose of further increasing high speed data rates, providing lower delays and so on (see non-patent literature 1). In addition, successor systems of LTE are also under study for the purpose of achieving further broadbandization and increased speed beyond LTE (referred to as, for example, "LTE-A (LTE-Advanced)," "FRA (Future Radio Access)," "4G," "5G," "5G+ (plus)," "NR (New RAT)," "LTE Rel. 14," "LTE Rel. 15 (or later versions)," and so on).

In existing LTE systems (for example, LTE Rel. 8 to 13), when UL synchronization is established between a radio base station and a user terminal, UL data can be transmitted from the user terminal. For this reason, in existing LTE systems, random access procedures (also referred to as "RACH procedures (Random Access CHannel Procedures)," "access procedures," and so on) for establishing UL synchronization are supported.

In random access procedures, a user terminal acquires information related to UL transmission timing (timing advance (TA) from a response (random access response) which a radio base station sends out in response to a randomly selected preamble (random access preamble), and the user terminal establishes UL synchronization based on this TA.

After UL synchronization is established, the user terminal receives downlink control information (DCI) (UL grant) from the radio base station, and then transmits UL data using the UL resource allocated by the UL grant.

### Citation List

### Non-Patent Literature

Non-Patent Literature 1: 3GPP TS36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, 5G, NR, etc.), it is desirable to accommodate various services such as high-speed and large-capacity communication (eMBB (enhanced Mobile Broad Band)), massive access (mMTC (massive MTC)) from devices (user terminal) for inter-device communication (M2M: Machine-to-Machine) such as IoT (Internet of Things) and MTC (Machine Type Communication), and low-latency, reliable communication (URLLC (Ultra-Reliable and Low Latency Communication)), in a single framework.

In such future radio communication systems, if random access procedures are performed in the same way as in existing LTE systems before UL data is transmitted, the latency time before UL data starts being transmitted will pose a problem. Also, in future radio communication systems, there is a possibility that the growth of overhead due to UL grants from radio base stations will pose a problem.

Therefore, in future radio communication systems, for the purpose of shortening the latency time before UL data starts being transmitted and reducing the growth of overhead, a study is in progress to allow contention of UL transmission among a plurality of user terminals and to transmit UL data without UL grants from radio base stations (also referred to as "contention-based UL transmission," "UL grant-less (-free) UL transmission," "UL grant-less and contention-based UL transmission," etc.).

The problem with future radio communication systems in which such contention-based UL transmission is introduced is how to control resource regions for contention-based UL transmission.

The present invention has been made in view of the above, and it is therefore one of the objects of the present invention to provide a user terminal and a radio communication method, whereby resource regions for contention-based UL transmission can be controlled adequately.

### Solution to Problem

A user terminal, according to one aspect of the present invention, has a transmission section that transmits UL data without an uplink (UL) grant from a radio base station, and a control section that controls transmission of the UL data, and the control section configures a plurality of resource regions with varying parameters, and selects a resource region to use to transmit the UL data from among the plurality of resource regions.

### Advantageous Effects of Invention

According to the present invention, it is possible to appropriately control resource regions for contention-based UL transmission.

### Brief Description of Drawings

FIG. 1 is a diagram to show an example of contention-based random access procedures;
FIG. 2 is a diagram to show an example of contention-based UL transmission;
FIG. 3 is a diagram to show examples of contention-based resource regions and non-contention-based resource regions;
FIG. 4 is a diagram to show an example in which a packet transmitted in contention-based UL transmission is divided;
FIG. 5 is a diagram to show examples of configurations of a plurality of contention-based resource regions according to the first aspect of the present invention;
FIG. 6 is a diagram to show an example of UL data allocation according to the first aspect;
FIG. 7 is a diagram to show an example of a contention-based resource region according to the second aspect of the present invention;
FIG. 8 is a diagram to show an example of on/off control of the contention-based resource region according to the second aspect;
FIG. 9 is a diagram to show another example of on/off control of the contention-based resource region according to the second aspect;
FIG. 10 is a diagram to show an example of a schematic structure of a radio communication system according to the present embodiment;
FIG. 11 is a diagram to show an example of an overall structure of a radio base station according to the present embodiment;
FIG. 12 is a diagram to show an example of a functional structure of a radio base station according to the present embodiment;
FIG. 13 is a diagram to show an example of an overall structure of a user terminal according to the present embodiment;
FIG. 14 is a diagram to show an example of a functional structure of a user terminal according to the present embodiment; and
FIG. 15 is a diagram to show an example hardware structure of a radio base station and a user terminal according to the present embodiment.

### Description of Embodiments

Existing LTE systems (for example, LTE Rel. 8 to 13) support random access procedures for establishing UL synchronization. Random access procedures include contention-based random access (also referred to as "CBRA" and so on) and non-contention-based random access (also referred to as "non-CBRA," "contention-free random access (CFRA)," and so on).

In contention-based random access (CBRA), a user terminal transmits a preamble, which is selected randomly from a plurality of preambles provided for each cell (also referred to as "random access preambles," "random access channels (PRACHs)," "RACH preambles" and so on). Furthermore, contention-based random access is user terminal-initiated random access procedures, and can be used, for example, when gaining initial access, when starting or resuming UL transmission, and so on.

Meanwhile, in non-contention-based random access (non-CBRA, CFRA (Contention-Free Random Access), etc.), a radio base station assigns preambles, in a user terminal-specific manner, by using a downlink (DL) control channel (PDCCH (Physical Downlink Control Channel), EPDCCH (Enhanced PDCCH), etc.), and the user terminals transmit the preambles assigned by the radio base station. Non-contention-based random access is network-initiated random access procedures, and can be used, for example, when conducting handover, when starting or resuming DL transmission, and so on (when transmission of DL retransmission command information is started or restarted in UL).

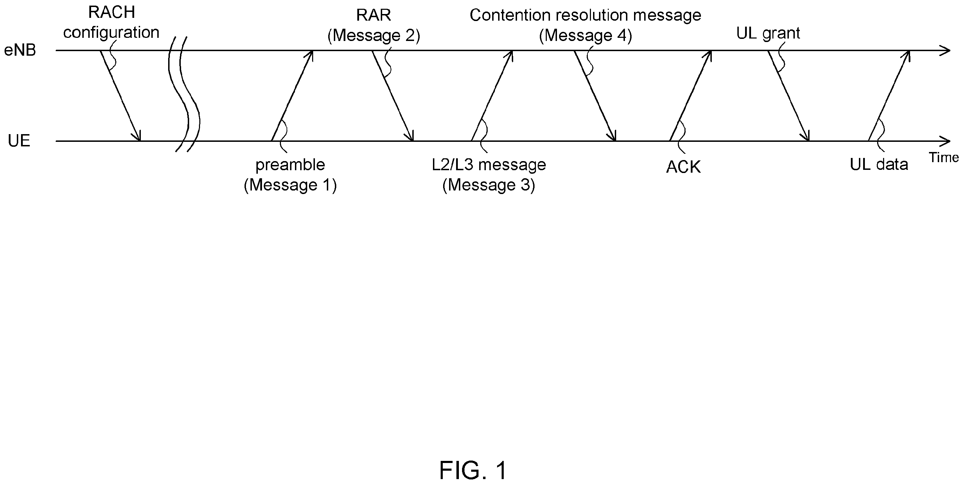

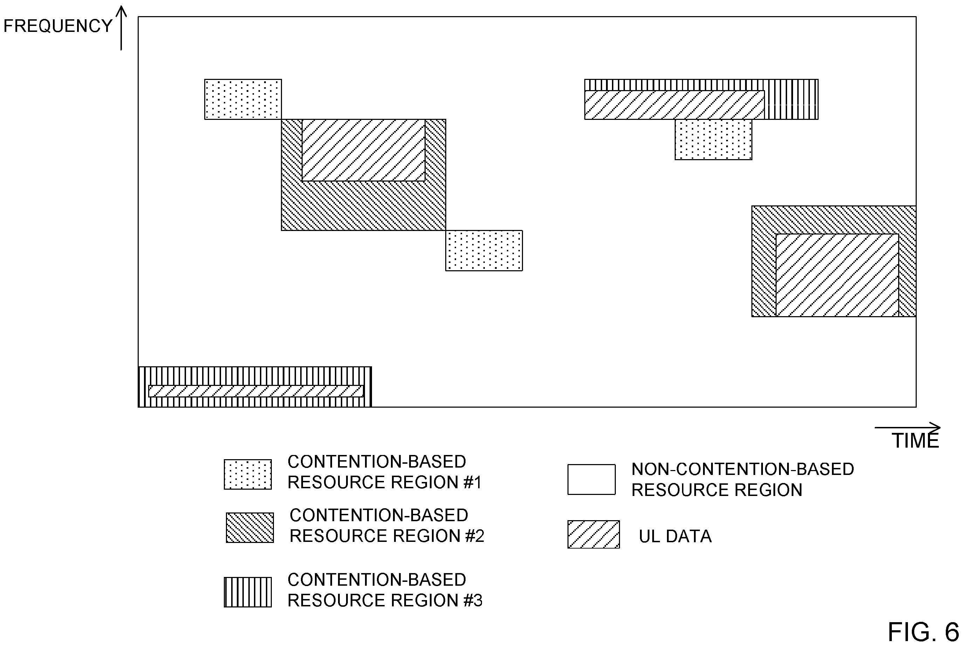

FIG. 6 is a diagram to show an example of contention-based random access procedures. In FIG. 1, a user terminal receives, in advance, information (PRACH configuration information) that indicates the configuration of a random access channel (PRACH) (PRACH configuration, RACH configuration, etc.), via system information (for example, the MIB (Mater Information Block) and/or SIBs (System Information Blocks)), higher layer signaling (for example, RRC (Radio Resource Control) signaling) and so on.

The PRACH configuration information can indicate, for example, a plurality of preambles (for example, preamble formats) that are defined in each cell, the time resources that are used in PRACH transmission (including, for example, a system frame index, a subframe index and so on) and the offset (prach-FrequencyOffset) to indicate the starting position of frequency resources (for example, six resource blocks (PRBs (Physical Resource Blocks))).

As shown in FIG. 1, when the user terminal transitions from idle mode (RRC_IDLE) to RRC-connected mode (RRC_CONNECTED) (for example, when gaining initial access), if UL synchronization is not established despite the fact that the user terminal is in RRC-connected mode (for example, when UL transmission is started or resumed), the user terminal can randomly select one of a plurality of preambles that are indicated in the PRACH configuration information, and transmit the selected preamble using the PRACH (message 1).

Upon detecting the preamble, the radio base station transmits a random access response (RAR) (message 2) in response to that. If the user terminal fails to receive a RAR within a predetermined period (RAR window) after the preamble is transmitted, the user terminal increases the transmission power of the PRACH and transmits the preamble again (retransmission). Note that the act of increasing the transmission power upon retransmission is also referred to as "power ramping."

Upon receiving the RAR, the user terminal adjusts the transmission timing in the UL based on the timing advance (TA) that is included in the RAR, and establishes UL synchronization. Furthermore, the user terminal transmits a higher layer (L2/L3 (layer 2/layer 3)) control message (message 3) in the UL resource specified by the UL grant included in the RAR. This control message contains the user terminal's identifier (UE-ID). The user terminal's identifier may be, for example, a C-RNTI (Cell-Radio Network Temporary Identifier) in the event the user terminal is in RRC-connected mode, or may be a higher layer UE-ID such as an S-TMSI (System Architecture Evolution-Temporary Mobile Subscriber Identity) in the event the user terminal is in idle mode.

In response to the higher layer control message, the radio base station sends a contention-resolution message (message 4). The contention-resolution message is transmitted based on the above-mentioned user terminal identifier included in the control message. Upon successfully detecting the contention-resolution message, the user terminal transmits an HARQ (Hybrid Automatic Repeat reQuest)-based positive acknowledgment (ACK) to the radio base station. By this means, the user terminal in idle mode transitions to RRC-connected mode.

On the other hand, if the user terminal fails to detect the contention-resolution message, the user terminal judges that contention has occurred, reselects a preamble, and repeats the random access procedures from message 1 to message 4.

When learning from an ACK from the user terminal that the contention has been resolved, the radio base station transmits a UL grant to the user terminal. The user terminal starts transmitting UL data using the UL resource allocated by the UL grant.

According to the above-described contention-based random access, if the user terminal desires to transmit UL data, the user terminal can voluntarily (autonomously) start random access procedures. Also, since UL synchronization is established first and then UL data is transmitted using a UL resource that is allocated by a UL grant in a user terminal-specific manner, reliable UL transmission is made possible.

Now, future radio communication systems (for example, 5G, NR etc.) are anticipated to accommodate various services such as high-speed and large-capacity communication (eMBB), massive access (mMTC) from devices (user terminals) for inter-device communication (M2M) such as IoT and MTC, and low-latency, reliable communication (URLLC), in a single framework.

In such future radio communication systems, if the same contention-based random access as in existing LTE systems is executed before UL data is transmitted, there is a possibility that the latency time before UL data starts being transmitted will pose a problem. Also, in future radio communication systems, if UL resource allocation (UL grant) from the radio base station is needed before UL data is transmitted, the growth of overhead is likely to pose a problem.

For example, in massive access such as in mMTC, the frequency to transmit UL data is decreased, so that the aforementioned contention-based random access may have to be executed upon every UL data transmission opportunity. In this case, collisions of preambles between user terminals may occur more frequently, and the latency time before UL data starts being transmitted may increase. This is because, in the contention-based random access described above, when a collision of preambles occurs among a plurality of user terminals, at least one of these multiple user terminals must perform random access procedures again.

Also, in the event of massive access such as in mMTC, when many UL grants are transmitted from a radio base station to individual user terminals, the ratio of overhead with respect to the UL data that is actually transmitted might increase relatively.

Therefore, in future radio communication systems, contention-based UL transmission, in which contention of UL transmission by a plurality of user terminals is permitted and UL data is transmitted without UL grants from radio base stations, is under study, for the purpose of shortening the latency time before UL data starts being transmitted and reducing the growth of overhead.

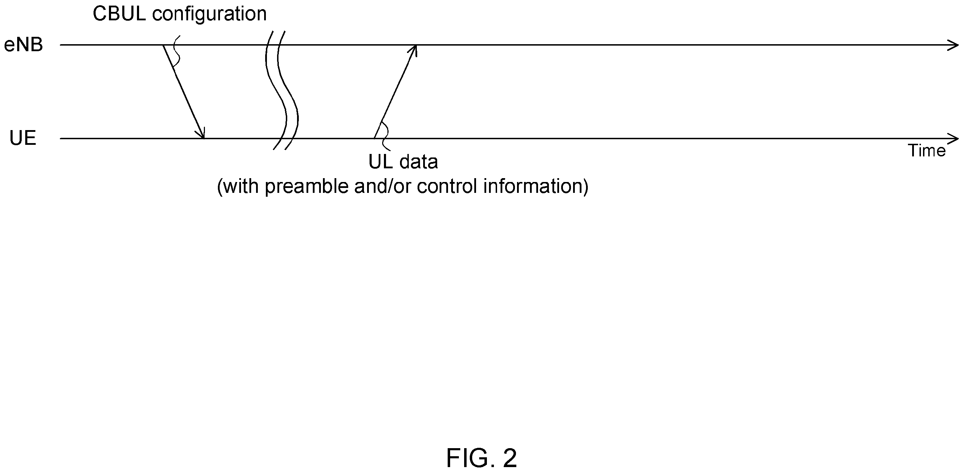

FIG. 2 is a diagram to show an example of contention-based UL transmission. Referring to FIG. 2, a user terminal may receive configuration information (CBUL configuration information) related to contention-based UL (CBUL) transmission, in advance, via system information (for example, the MIB and/or SIBs), higher layer signaling (for example, RRC signaling) and so on.

As shown in FIG. 2, the user terminal starts transmitting UL data without receiving a UL grant from the radio base station. To be more specific, when the user terminal transmits UL data at a trigger of new UL transmission, the user terminal may transmit a preamble and control information for the UL data together with the UL data. Furthermore, the user terminal may transmit the above control information and UL data without a response from the radio base station to the preamble.

Here, the preamble is used to detect UL transmission at the radio base station. By transmitting the preamble together with UL data, the radio base station can detect the UL transmission at the transmission opportunity of new UL data (preferably in a time resource before the UL data). The sequence of this preamble may be randomly selected from the multiple sequences indicated by the above CBUL configuration information. Also, the preamble may be used for channel estimation and beam search.

Furthermore, control information for UL data may include at least one of identification information of the user terminal that transmits the UL data (for example, C-RNTI, S-TMSI, etc.), information related to this UL data (for example, the amount of UL data (BSR (Buffer Status Report)), the modulation scheme, the transport block size (TBS), the coding rate, etc.), information related to the capability of this user terminal, information related to the transmission resource for this UL data (for example, the index and offset of the time and frequency resource, etc.), information related to retransmission control of this UL data (for example, the HARQ process number (HPN), the redundancy version (RV), a new data indicator (NDI), etc.) and information related to the repetition of this UL data (for example, the number of repetitions, the hopping pattern, whether hopping is applied or not, etc.).

The transmission resource for transmitting at least one of the above preamble, control information and UL data may be determined based on the above CBUL configuration information. The transmission resource is at least one of a frequency resource, a time resource, a code resource, a power resource and a space resource. At least one of the preamble, control information and UL data may be orthogonal-multiplexed (for example, code-division-multiplexed) and/or non-orthogonal-multiplexed (for example, power-multiplexed or space-multiplexed) with other user terminals.

In contention-based UL transmission shown in FIG. 2, contention of UL data from a plurality of user terminals is permitted, so that it is possible to omit messages 2 to 4 (see FIG. 1) in the contention-based random access described above, and it is possible to shorten the latency time before UL data starts being transmitted. Also, since UL data is transmitted without UL grants from the radio base station, overhead can be reduced.

Note that subsequent UL data may be transmitted together with preambles and control information, or may be transmitted skipping preambles and/or control information. Also, in FIG. 2, the user terminal performs contention-based UL transmission without establishing UL synchronization. Therefore, when opportunities to transmit new UL data emerge, the user terminal transmits preambles with UL data.

Meanwhile, although not illustrated, contention-based UL transmission shown in FIG. 2 may be performed after the random access procedures with messages 1 to 4 of FIG. 1 are executed. In this case, since the user terminal has established UL synchronization in random access procedures, the user terminal can skip transmitting preambles.

In contention-based UL transmission described above, how to control resource regions for contention-based UL transmission is the problem. Therefore, based on the assumption that contention-based UL transmission will be introduced, a study is underway, for the purpose of preventing interference against resource regions for non-contention-based UL transmission (also referred to as "non-CBUL transmission," "contention-free UL (CFUL) transmission," etc.), in which UL data is transmitted based on UL grants from the radio base station, to divide between resource regions for above contention-based UL transmission (hereinafter also referred to as "contention-based resource regions") and resource regions for above non-contention-based UL transmission (hereinafter also referred to as "non-contention-based resource regions").

For example, research is in progress to divide between contention-based resource regions and non-contention-based resource regions by using at least one of time division multiplexing (TDM), frequency division multiplexing (FDM) and code division multiplexing (CDM).

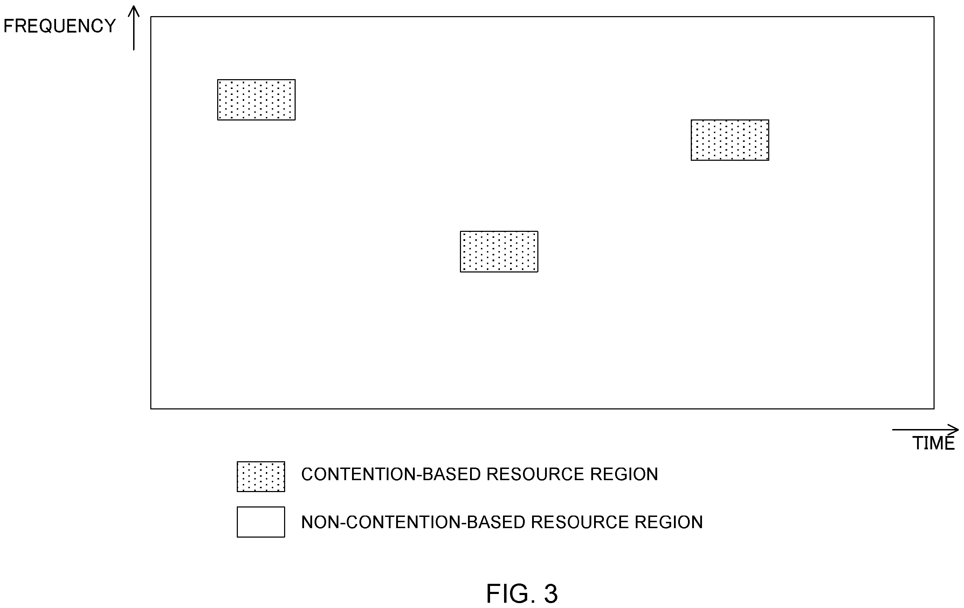

FIG. 3 is a diagram to show examples of contention-based resource regions and non-contention-based resource regions. For example, in FIG. 3, contention-based resource regions and non-contention-based resource regions are divided by TDM and FDM. As shown in FIG. 3, by separating between contention-based resource regions and non-contention-based resource regions, it is possible to prevent resources that are scheduled and allocated by the radio base station from being subject to interference by contention-based UL transmission.

Contention-based resource regions may be configured by system information (also referred to as "MIB and/or SIBs," "broadcast information," etc.) or by higher layer signaling (for example, RRC signaling or MAC (Medium Access Control) signaling). Alternatively, these contention-based resource regions may be specified by layer 1/layer 2 (L1/L2) control channels (also referred to as "PDCCH (Physical Downlink Control CHannel)," "EPDCCH (Enhanced Physical Downlink Control Channel)," "DL control channel," etc.).

Alternatively, contention-based resource regions may be specified by a combination of system information or higher layer signaling, and with L1/L2 control channels. Alternatively, these contention-based resource regions may be derived by user terminals based on user terminal-specific parameters (for example, user terminal identification information such as C-RNTIs and S-TMSIs), or based on cell-specific parameters (for example, cell identification information such as physical cell IDs).

As described above, when contention-based resource regions and non-contention-based resource regions are divided, there is a possibility that packets (UL data) that are transmitted in contention-based UL transmission are divided. For example, when a packet that is repeated a relatively large number of times to expand the coverage is transmitted, when a packet of a relatively large size is transmitted, and at other times, there is a possibility that packets that are transmitted in contention-based UL transmission are divided.

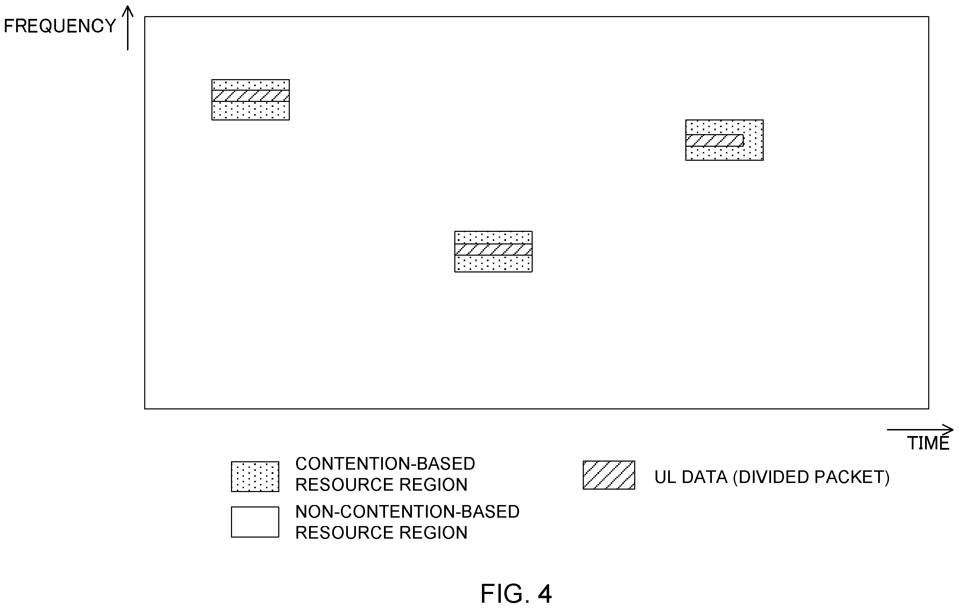

FIG. 4 is a diagram to show an example in which a packet transmitted in contention-based UL transmission is divided. FIG. 4 shows, as an example, a case where a packet that is to be repeated a relatively large number of times is divided, but cases where packets are divided are by no means limited to this. As shown in FIG. 4, when one packet is divided into a plurality of divided packets (here, three divided packets) and these divided packets are allocated to contention-based resource regions that differ from one another in time, delays might be caused before all the divided packets are transmitted, or delays might be caused due to the process of dividing packets, the process of aggregating packets, and so on.

In this way, if contention-based resource regions and non-contention-based resource regions are divided, if packets that are transmitted in contention-based UL transmission are divided, delays may be produced. So, the present inventors have come up with the idea of preventing packets that are transmitted in contention-based UL transmissions from being divided, by configuring multiple contention-based resource regions based on different parameters (first aspect).

In addition, the present inventors have focused on the possibility of a shortage of non-contention-based resource regions when contention-based resource regions and non-contention-based resource regions are divided, and come up with the idea of making contention-based resource regions available for use in non-contention-based UL transmission (second aspect).

Now, embodiments of the present invention will be described below in detail with reference to the accompanying drawings. Note that in contention-based UL transmission according to the present embodiment, UL data may be transmitted with preamble and/or control information pertaining to the UL data, or UL data may be transmitted alone. Also, a user terminal may perform contention-based UL transmission without establishing UL synchronization with radio base stations, or the user terminal may establish UL synchronization using messages 1 to 4 of FIG. 1, and then perform contention-based UL transmission (in the latter case, the user terminal may skip transmitting preambles).

Furthermore, a contention-based resource region according to the present embodiment is comprised of a predetermined number of time resources and frequency resources. The time resources may be referred to as "symbols," "subframe spacing," "subframes," "transmission time intervals (TTIs)," "scheduling units" and so on. Furthermore, the frequency resources may be referred to as "resource blocks (PRBs)," a "resource block group (RBG)," and so on. In addition, a contention-based resource region is comprised at least one of code resources (for example, cyclic shift value, OCC (Orthogonal Cover Code), etc.), space resources (for example, when space multiplexing is used), and power resources (for example, when power multiplexing is used).

### (First Aspect)

In accordance with a first aspect of the present invention, configurations of a plurality of contention-based resource regions with different parameters will be described. The user terminal may configure multiple contention-based resource regions based on different parameters, select at least one contention-based resource region from among the multiple contention-based resource regions, and transmit UL data using the resources in the selected contention-based resource region.

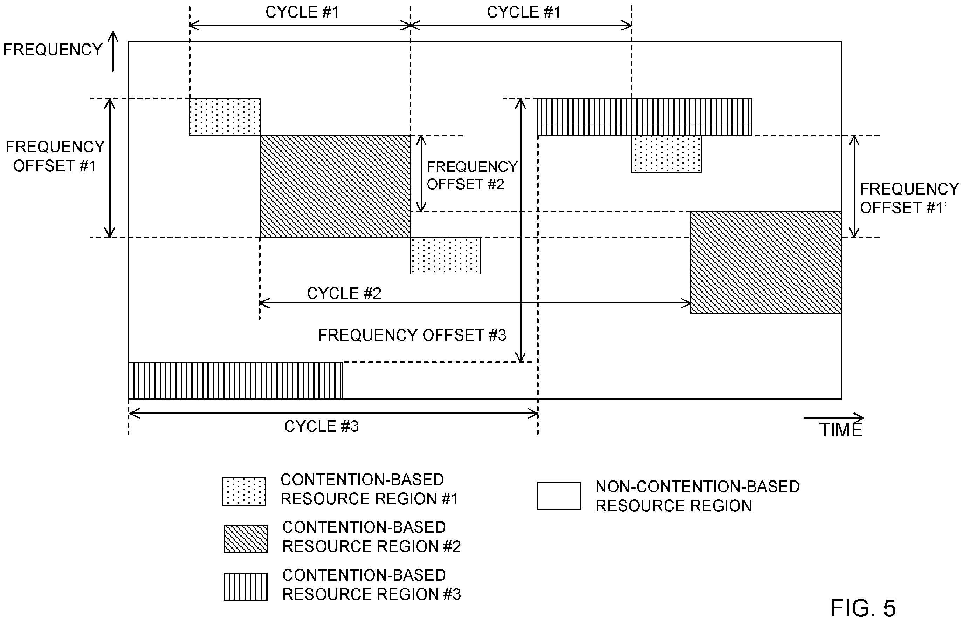

FIG. 5 is a diagram to show examples of configurations of a plurality of contention-based resource regions according to the first aspect. Each contention-based resource region is configured in a given cycle. For example, in FIG. 5, contention-based resource regions #1 to #3 are configured in cycles #1 to #3, respectively. Not that, although cycles #1 to #3 in FIG. 5 all vary, at least two of them may be the same.

Also, frequency hopping may be applied to each contention-based resource region. For example, frequency hopping is applied to each of contention-based resource regions #1 to #3 in FIG. 5. Different frequency hopping-related parameters may be applied to contention-based resource regions #1 to #3. Different frequency offset values (#1, #1', #2 and #3) are applied to contention-based resource regions #1 to #3 of FIGs. 5, respectively.

Note that the frequency hopping-related parameter is not limited to the frequency offset value, and may be a parameter to indicate whether frequency hopping is applied or not. Also, between the same contention-based resource regions, the same frequency offset value may be used, or different frequency offset values may be used. For example, between contention-based resources #1, different frequency offset values #1 and #1' are used on a per cycle basis.

Furthermore, in FIG. 5, contention-based resource regions #1 to #3 may be comprised of different numbers of frequency resources and/or time resources. For example, contention-based resource #2 is comprised of a larger number of time resources and frequency resources than contention-based resource region #1, so as to be suitable for communicating large-capacity UL data. Also, contention-based resource #3 is comprised of a larger number of time resources than contention-based resource region #1, so as to be suitable for UL data communication that is long in time, such as occurs when repetition is applied.

Furthermore, in FIG. 5, among contention-based resource regions #1 to #3, varying parameters that relate to the number of times to repeat UL data subject to contention-based UL transmission may be used. For example, contention-based resource regions #1 and #2 may be configured so that repetition is not applied, and, in contention-based resource region #3, the number of times to repeat UL data may be set to a predetermined value (for example, 100).

Also, parameters related to transmission processes of UL data subject to contention-based UL transmission may be different among contention-based resource regions #1 to #3. These parameters may include, for example, at least one of the modulation scheme, the coding rate, the MCS index, which indicates the modulation scheme and the coding rate, the transport block size, and the packet size.

Also, parameters related to preambles may vary among contention-based resource regions #1 to #3. The parameters related to preambles may include at least one of information to indicate whether or not a preamble is transmitted with UL data, and information to indicate a preamble sequence which the user terminal can select.

In contention-based resource regions #1 to #3, identification information of different resource groups may be provided. The identification information of resource groups may be, for example, resource group-specific radio network temporary identifiers (RNTIs). Note that, in FIG. 5, resource group #1 may be constituted by contention-based resource region #1, resource group #2 may be constituted by contention-based resource region #2, and resource group #3 may be constituted by contention-based resource region #3.

Also, parameters that relate to time and/or frequency locations may vary among contention-based resource regions #1 to #3. These parameters may include, for example, at least one of the starting point of the contention-based resource region (for example, the starting index of the frequency resources and/or time resources), the cycle, and the frequency offset.

Also, numerologies may vary among contention-based resource regions #1 to #3. The numerologies may include at least one of the subcarrier spacing, the cyclic prefix (CP) duration, the symbol duration, and the radio frame configuration.

Parameters related to retransmission control may vary among contention-based resource regions #1 to #3. These parameters may indicate at least one of whether or not transmission is the initial transmission, the redundancy version (RV), and the HARQ process number (HPN) and so on.

Furthermore, parameters related to the multiplexing method may vary among contention-based resource regions #1 to #3. These parameters may include at least one of whether or not code division multiplexing is applied, whether or not non-orthogonal-multiplexing (NOMA) is applied, including space multiplexing and/or power multiplexing.

As described above, among a plurality of contention-based resource regions according to the first aspect, at least one of the number of time resources, the number of frequency resources, a parameter related to the number of repetitions, a parameter related to transmission process, a parameter related to frequency hopping, a parameter related to preambles, resource group identification information, a parameter related to time and/or frequency locations, numerology, and a parameter related to retransmission control may vary.

Also, according to the first aspect, multiple contention-based resource regions such as described above may be configured by system information (also referred to as "MIB and/or SIBs," "broadcast information," etc.) or by higher layer signaling (for example, RRC signaling or MAC signaling). Alternatively, these multiple contention-based resource regions may be specified by L1/L2 control channels. Alternatively, these contention-based resource regions may be specified by a combination of system information or higher layer signaling with L1/L2 control channels.

Alternatively, these contention-based resource regions may be derived by user terminals based on user terminal-specific parameters (for example, user terminal identification information such as C-RNTIs and S-TMSIs), or based on cell-specific parameters (for example, cell identification information such as physical cell IDs).

FIG. 6 is a diagram to show an example of selecting contention-based resource regions according to the first aspect. In FIG. 6, as in FIG. 5, assume that contention-based resource regions #1 to #3, among which the above-mentioned parameters vary, are configured. In FIG. 6, the user terminal selects at least one contention-based resource region from among contention-based resource region #1 to #3, and transmits UL data using resources in the selected contention-based resource region.

To be more specific, the user terminal may select at least one contention-based resource region to use to transmit UL data, based on at least one of the size of the UL data, the state of the buffer (BSR (Buffer Status Report)), the received power of reference signals (RSRP (Reference Signal Received Power)), the received quality of reference signals (RSRQ (Reference Signal Received Quality)), the above-described parameter related to the number of repetitions, the above-described parameter related to transmission processes, numerology, a parameter related to retransmission control, and use case (for example, mMTC, URLLC, etc.).

For example, in FIG. 6, as a transmission resource for a packet that is repeated a large number of times (for example, 100 times), the user terminal may select contention-based resource region #3, which is comprised of more time resources than contention-based resource regions #1 and #2. Meanwhile, the user terminal may select contention-based resource region #2, as the transmission resource for a packet to which repetition does not apply.

Furthermore, the user terminal may select contention-based resource region #2 as the transmission resource for a packet of a large packet size. Furthermore, as shown in FIG. 6, the user terminal may select a plurality of contention-based resource regions #2 and #3, and allocate UL data to each of these multiple contention-based resource regions #2 and #3 and transmit these.

For example, FIG. 6 assumes the case where, relatively high-order modulation schemes such as 64 QAM (Quadrature Amplitude Modulation) and 256 QAM are configured as modulation schemes that can be used in contention-based resource region #2, relatively low-order modulation schemes such as QPSK (Quadrature Phase Shift Keying) and 16 QAM are configured as modulation schemes that can be used in contention-based resource region #3.

In this case, the user terminal can transmit information as to which modulation schemes are applied to the UL data allocated to contention-based resource regions #2 and #3, as UL data control information, with the UL data (see FIG. 2). For example, when the user terminal maps QPSK-modulated UL data to contention-based resource region #3 where QPSK or 16 QAM can be used, the user terminal may transmit control information indicating that QPSK has been applied, with the UL data.

According to the first aspect, multiple contention-based resource regions with different parameters are configured, so that resource regions can be selected appropriately depending on use. As a result of this, it is possible to prevent packets transmitted in contention-based UL transmission from being divided, and prevent the occurrence of delays.

### (Second Aspect)

In accordance with a second aspect of the present invention, on/off control of contention-based resource regions will be described. Note that the second example may be used in combination with the first example, or may be used alone.

If non-contention-based resource regions and contention-based resource regions are separated, the non-contention-based resource regions may run short. So, it is desirable to configure contention-based resource regions "ON" and "OFF" depending on the volume of traffic in non-contention-based UL transmission, and make contention-based resource regions available for use in non-contention-based UL transmission.

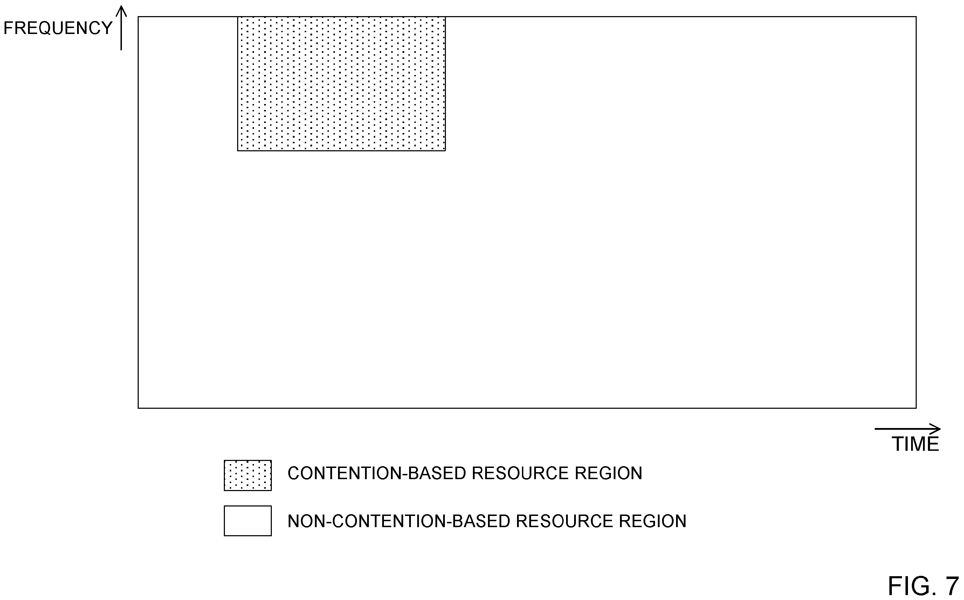

FIG. 7 is a diagram to show an example of a contention-based resource region according to the second aspect. For example, referring to FIG. 7, a contention-based resource region is time-division-multiplexed (TDM) and frequency-division-multiplexed (FDM) with a non-contention-based resource region. Note that the structure of resource regions shown in FIG. 7 is just an example, and this is by no means limiting. The contention-based resource region and the non-contention-based resource region have only to be multiplexed using at least one of TDM, FDM and CDM.

The non-contention-based resource region can be used to communicate, for example, large-capacity data such as communicated in eMBB, data with a relatively low demand for latency reduction, and so on, but is not limited to this use. The radio base station allocates (schedules) resources in the non-contention-based resource region to the user terminal, and the user terminal transmits or receives UL data using the resources scheduled by the radio base station. Note that, in the non-contention-based resource region, DL data can be transmitted or received.

On the other hand, the contention-based resource region can be used, for example, small-capacity data such as communicated in MTC, data with a relatively low demand for latency reduction, and so on, but is not limited to this use. The user terminal transmits UL data without UL grants from the radio base station, by using resources selected from the contention-based resource region.

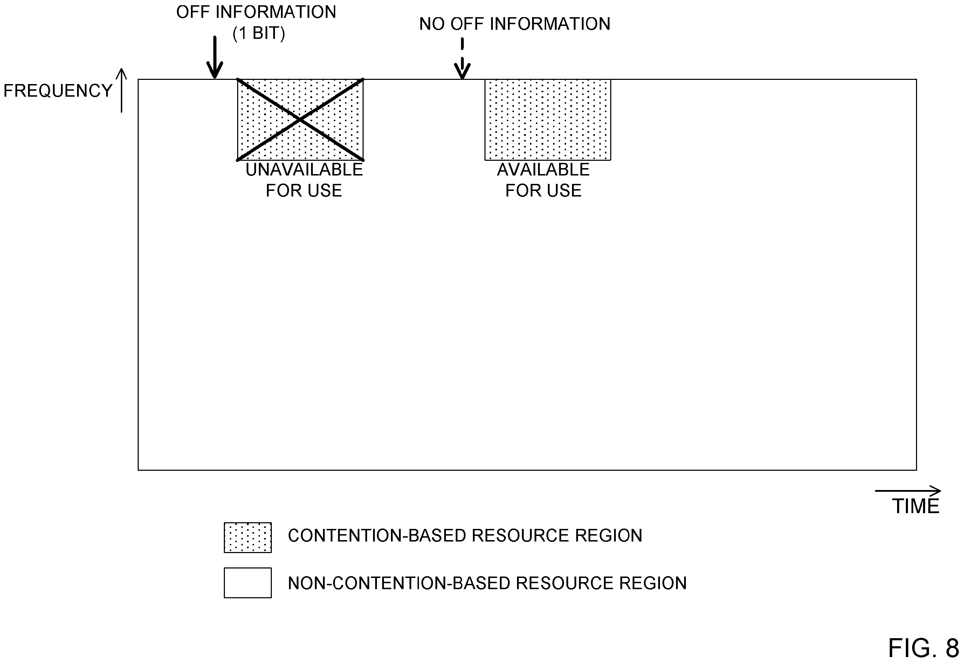

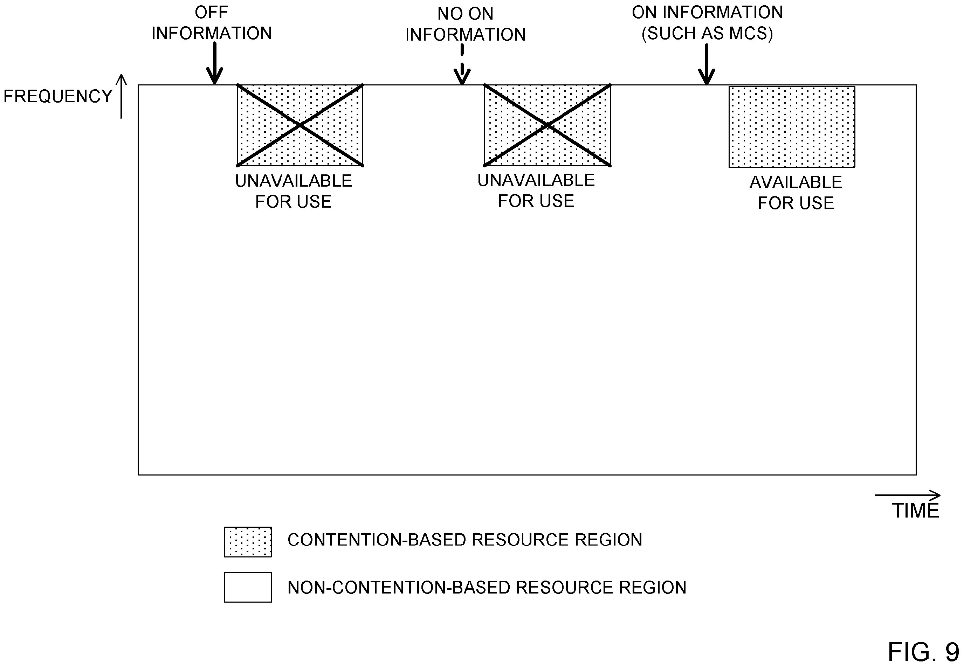

Now, on/off-state control of contention-based resource regions will be explained with reference to FIG. 8 and FIG. 9. When "off information," which turns off the use of a contention-based resource region, is signaled, the user terminal may hold UL data transmission using this contention-based resource region.

FIG. 8 is a diagram to show an example of on/off control of a contention-based resource region according to the second aspect. Referring to FIG. 8, assume that a contention-based resource region is configured by higher layer signaling or system information. As shown in FIG. 8, when off information is signaled at a DL timing before (or including) a contention-based resource region, the user terminal may hold UL data transmission where this contention-based resource region is used.

This DL timing may be determined in advance, or may be configured by higher layer signaling or system information. For example, in the event time division duplex (TDD) or dynamic TDD is applied, the DL resource (for example, the DL subframe) immediately before the contention-based resource region may be used. Also, in the event frequency division duplex (FDD) is used, time resources before (or including) the contention-based resource region in the DL carrier may be used.

Also, as for the signaling of off information, at least one of lower layer signaling (for example, physical layer signaling, L1/L2 control channels, DL control channels, etc.), higher layer signaling (for example, RRC signaling, MAC signaling, etc.) and broadcasting (for example, system information such as SIBs, the MIB, etc.) can be used.

Furthermore, signaling of off information may be specific to the resource group, to which the contention-based resource region belongs, may be cell-specific, or may be user terminal-specific. When signaling of off information is resource group-specific, identification information of resource groups (for example resource group-specific RNTIs) may be provided.

For example, in FIG. 8, one-bit off information is included in resource group-specific downlink control information (DCI), which is signaled through lower layer signaling (DL control channel, L1/L2 control channel, etc.). The user terminal performs the process (for example, blind decoding, etc.) of detecting off information that is masked with identification information (RNTI) of the resource group to which the contention-based resource region belongs, at the above DL timing.

In FIG. 8, when the user terminal detects the above off information at the above DL timing, the user terminal judges that the immediately-following contention-based resource region cannot be used, and cancels contention-based UL transmission which uses this contention-based resource region. On the other hand, if the user terminal does not detect the above off information at the above DL timing, the user terminal judges that the immediately-following contention-based resource region can be used, and starts contention-based UL transmission which uses this contention-based resource region.

As shown in FIG. 8, when on/off control of contention-based resource regions configured by higher layer signaling or system information is dynamically performed using lower layer signaling, it is possible to use contention-based resource regions in non-contention-based transmission, flexibly, depending on the volume of traffic in non-contention-based transmission. As a result of this, improved spectral efficiency can be achieved.

FIG. 9 is a diagram to show another example of on/off control of contention-based resource regions according to the second aspect. A case has been described above with FIG. 8 where the period in which a contention-based resource region is placed in an off state is limited to the contention-based resource region that follows immediately after receipt of off information. By contrast with this, with FIG. 9, a case will be illustrated where the period in which a contention-based resource region is placed in an on state starts when the above off-state is received, and lasts until an on-state to turn on the use of the contention-based resource region is received. Note that, with reference to FIG. 9, differences from FIG. 8 will be primarily described below.

Referring to FIG. 9, when the above off information is detected at the above DL timing, the user terminal judges that the contention-based resource region cannot be used until the above on information is detected, and cancels contention-based UL transmission which uses this contention-based resource region. Also, when the user terminal detects the above on-state, the user terminal judges that the contention-based resource region can be used, and contention-based UL transmission using the contention-based resource region is used.

The DL timing at which the on information is signaled may be determined in advance, or may be configured by higher layer signaling or system information. Also, as for the signaling of on information, at least one of lower layer signaling (for example, physical layer signaling, L1/L2 control channels, DL control channels, etc.), higher layer signaling (for example, RRC signaling, MAC signaling, etc.) and broadcasting (for example, system information such as SIBs, the MIB, etc.) can be used.

In addition, signaling of off information may be specific to the resource group, to which the contention-based resource region belongs, may be cell-specific, or may be user terminal-specific. When signaling of on information is resource group-specific, identification information of resource groups (for example resource group-specific RNTIs) may be provided.

Also, on information may include control information related to contention-based UL transmission in the contention-based resource region to be placed in the on-state. This control information may indicate, for example, at least one of the information included in UL grants, such as the modulation scheme, the coding rate, the transport block size, the number of repetitions, and the radio parameters for the contention-based resource region (this is, for example, the subcarrier spacing, the CP duration, the frame structure, etc., also referred to as "numerology"). Also, the control information for switching the contention-based resource region, which has been described above with the first aspect, may be included. The user terminal controls transmission of UL data in the contention-based resource region based on this control information.

For example, in FIG. 9, on information is included in resource group-specific downlink control information (DCI), together with an MCS (Modulation and Coding Scheme) index, which indicates the modulation scheme and the coding rate.

Referring to FIG. 9, when the user terminal detects the above DCI masked with resource group identification information (RNTI) at the above DL timing, the user terminal starts contention-based UL transmission in the contention-based resource region, based on the on information included in the DCI. Furthermore, the user terminal may determine the modulation scheme, the coding rate, and the transport block size to apply to UL data based on the MCS index included in the DCI.

As shown in FIG. 9, when on/off control of contention-based resource regions configured by higher layer signaling or system information is dynamically performed using lower layer signaling, it is possible to use contention-based resource regions in non-contention-based transmission, flexibly, depending on the volume of traffic in non-contention-based transmission. Also, when adding control information related to contention-based UL transmission to on information, transmission of UL data in contention-based resource regions can be controlled even more adequately.

According to the second aspect, by placing a contention-based resource region in the off-state, the contention-based resource region can be used in non-contention-based transmission, so that, even when the traffic (for example, eMBB) of non-contention-based transmission increases, it is possible to extend non-contention-based resource regions while preventing interference against non-contention-based transmission.

### (Radio Communication System)

Now, the structure of a radio communication system according to the present embodiment will be described below. In this radio communication system, each radio communication method according to the above-described embodiments is employed. Note that the radio communication method according to each embodiment may be used alone or may be used in combination.

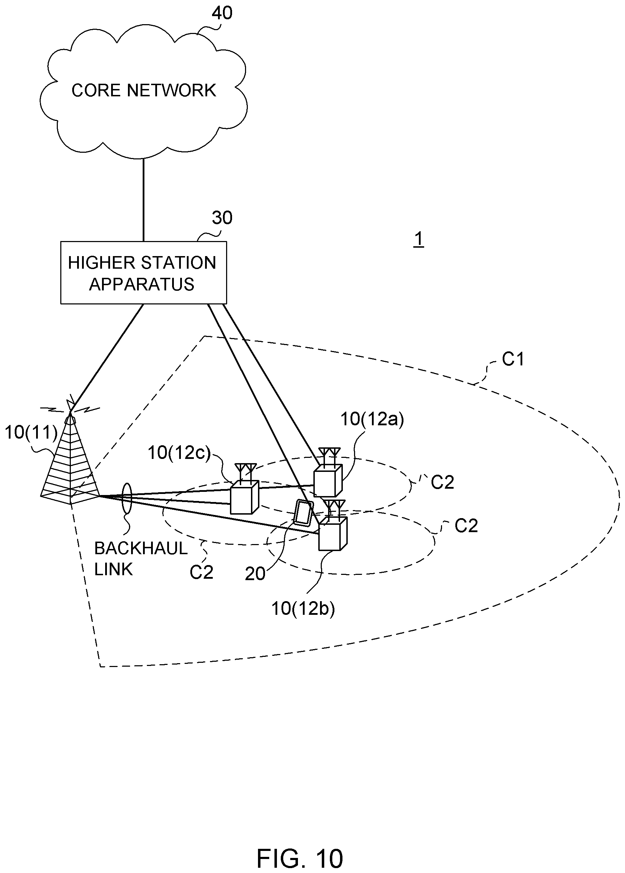

FIG. 10 is a diagram to show an example of a schematic structure of a radio communication system according to present embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit. Note that the radio communication system 1 may be referred to as "SUPER 3G," "LTE-A (LTE-Advanced)," "IMT-Advanced," "4G," "5G," "FRA (Future Radio Access)," "NR (New RAT)" and so on.

The radio communication system 1 shown in FIG. 10 includes a radio base station 11 that forms a macro cell C1, and radio base stations 12a to 12c that form small cells C2, which are placed within the macro cell C1 and which are narrower than the macro cell C1. Also, user terminals 20 are placed in the macro cell C1 and in each small cell C2. A configuration in which different numerologies are applied between cells may be adopted. Note that a "numerology" refers to a set of communication parameters that characterize the design of signals in a given RAT and the design of the RAT.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA or DC by using a plurality of cells (CCs) (for example, two or more CCs). Furthermore, the user terminals can use license band CCs and unlicensed band CCs as a plurality of cells. Note that it is possible to adopt a configuration including a TDD carrier, in which shortened TTIs are applied to some of a plurality of cells.

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz, 30 to 70 GHz and so on) and a wide bandwidth may be used, or the same carrier as that used in the radio base station 11 may be used. Note that the structure of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals.

In the radio communication system 1, as radio access schemes, OFDMA (orthogonal Frequency Division Multiple Access) can be applied to the downlink (DL), and SC-FDMA (Single-Carrier Frequency Division Multiple Access) can be applied to the uplink (UL). OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combinations of these, and OFDMA may be used in UL.

In the radio communication system 1, DL data channel (PDSCH (Physical Downlink Shared CHannel), which is also referred to as, for example, a "DL shared channel"), which is used by each user terminal 20 on a shared basis, a broadcast channel (PBCH (Physical Broadcast CHannel)), L1/L2 control channels and so on, are used as DL channels. User data, higher layer control information and SIBs (System Information Blocks) are communicated in the PDSCH. Also, the MIB (Master Information Block) is communicated in the PBCH.

The L1/L2 control channels include DL control channels (a PDCCH (Physical Downlink Control CHannel), an EPDCCH (Enhanced Physical Downlink Control CHannel) and so on), a PCFICH (Physical Control Format Indicator CHannel), a PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. The EPDCCH is frequency-division-multiplexed with the PDSCH and used to communicate DCI and so on, like the PDCCH. HARQ retransmission command information (ACK/NACK) in response to the PUSCH can be communicated using at least one of the PHICH, the PDCCH and the EPDCCH.

In the radio communication system 1, UL data channel (PUSCH (Physical Uplink Shared Channel)), which is also referred to as "UL shared channel" and so on), which is used by each user terminal 20 on a shared basis, a UL control channel (PUCCH (Pysical Uplink Control Channel)) a random access channel (PRACH (Physical Random Access Channel)) and so on are used as UL channels. User data, higher layer control information and so on are communicated by the PUSCH. Uplink control information (UCI), including at least one of retransmission command information (ACK/NACK), channel state information (CSI) and so on, is communicated in the PUSCH or the PUCCH. By means of the PRACH, random access preambles for establishing connections with cells are communicated.

### (Radio Base Station)

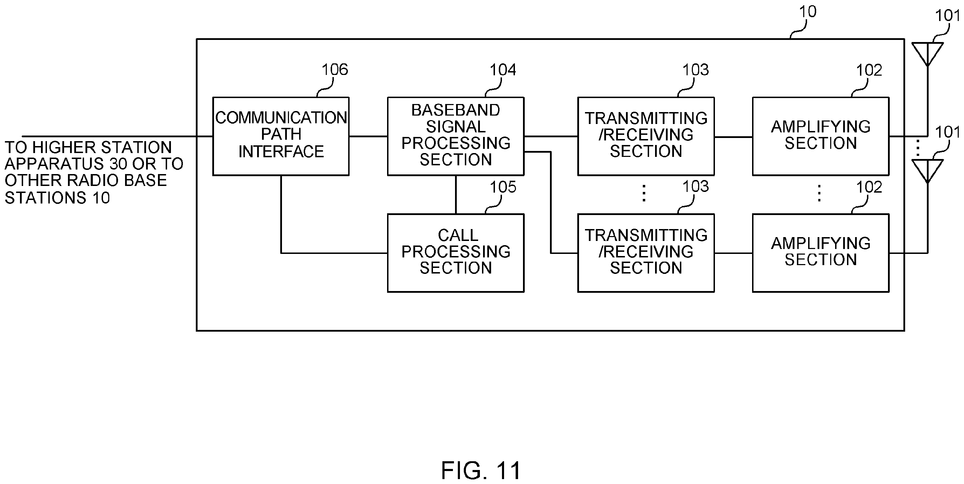

FIG. 11 is a diagram to show an example of an overall structure of a radio base station according to present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

DL data to be transmitted from the radio base station 10 to a user terminal 20 is input from the higher station apparatus 30 to the baseband signal processing section 104, via the communication path interface 106.

In the baseband signal processing section 104, the DL data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, DL control signals are also subjected to transmission processes such as channel coding and an inverse fast Fourier transform, and forwarded to each transmitting/receiving section 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for UL signals, radio frequency signals that are received in the transmitting/receiving antennas 101 are each amplified in the amplifying sections 102. The transmitting/receiving sections 103 receive the UL signals amplified in the amplifying sections 102. The received signals are converted into the baseband signal through frequency conversion in the transmitting/receiving sections 103 and output to the baseband signal processing section 104.

In the baseband signal processing section 104, user data that is included in the UL signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages the radio resources.

The communication path interface section 106 transmits and receives signals to and from the higher station apparatus 30 via a predetermined interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

Note that the transmitting/receiving sections 103 transmit DL signals (for example, DL control signals (DL control channels), DL data signals (DL data channels, DL shared channels and so on), DL reference signals (DM-RS, CSI-RS and so on), discovery signals, synchronization signals, broadcast signals and so on), and receive UL signals (for example, UL control signals (UL control channels), UL data signals (UL data channels, UL shared channels and so on), UL reference signals and so on).

To be more specific, the transmitting/receiving sections 103 transmit configuration information related to contention-based UL transmission (CBUL configuration information) by using system information or higher layer signaling. In addition, the transmitting/receiving sections 103 receive UL signals (at least one of preambles, control information, and UL data) transmitted from the user terminals 20 in contention-based UL transmission.

In addition, the transmitting/receiving sections 103 transmit configuration information related to a plurality of contention-based resource regions with varying parameters, using at least one of system information, higher layer signaling and a DL control channel. In this configuration information, at least one of the number of time resources, the number of frequency resources, a parameter related to the number of repetitions, a parameter related to the transmission process, a parameter related to frequency hopping, a parameter related to preambles, resource group identification information, a parameter related to time and/or frequency locations, numerology, and a parameter related to retransmission control may be included per contention-based resource region.

The transmission section and the receiving section of the present invention are comprised of a transmitting/receiving section 103 and/or a communication path interface 106.

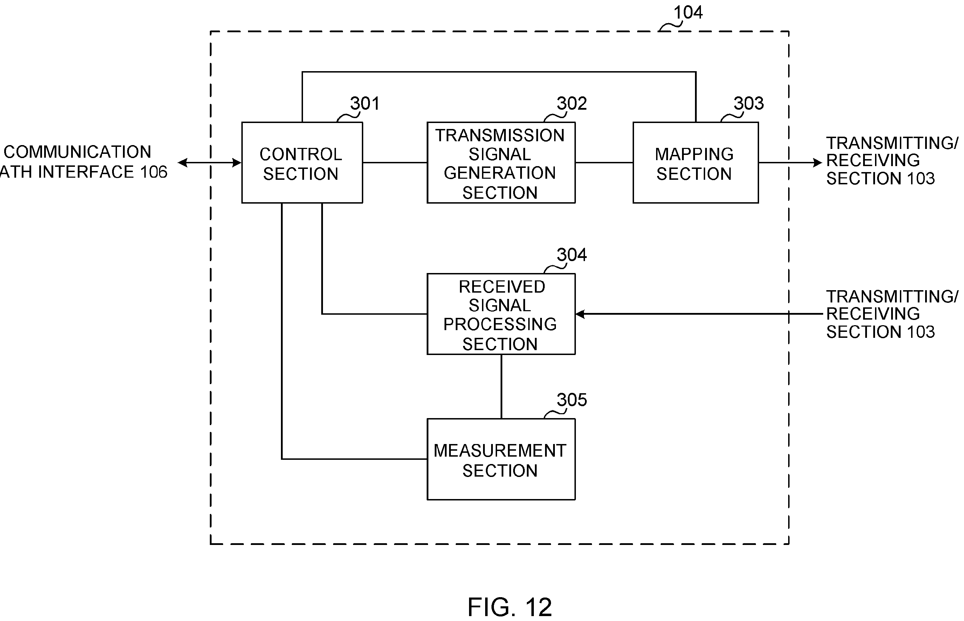

FIG. 12 is a diagram to show an example of a functional structure of a radio base station according to present embodiment. Note that, although FIG. 12 primarily shows functional blocks that pertain to characteristic parts of the present embodiment, the radio base station 10 has other functional blocks that are necessary for radio communication as well. As shown in FIG. 12, the baseband signal processing section 104 at least has a control section 301, a transmission signal generation section 302, a mapping section 303, a received signal processing section 304 and a measurement section 305.

The control section 301 controls the whole of the radio base station 10. The control section 301 can be constituted by a controller, a control circuit or control apparatus that can be described based on general understanding of the technical field to which the present invention pertains.

The control section 301, for example, controls the generation of signals in the transmission signal generation section 302, the allocation of signals by the mapping section 303, and so on. Furthermore, the control section 301 controls the signal receiving processes in the received signal processing section 304, the measurements of signals in the measurement section 305, and so on.

The control section 301 controls the scheduling (for example, resource allocation) of DL signals and/or UL signals. To be more specific, the control section 301 controls the transmission signal generation section 302, the mapping section 303 and the transmitting/receiving sections 103 to generate and transmit DCI (DL assignment) that includes DL data channel scheduling information and DCI (UL grant) that includes UL data channel scheduling information.

Furthermore, the control section 301 may control contention-based UL (CBUL) transmission, in which UL data is transmitted from the user terminals 20 without UL grants. For example, the control section 301 may determine the above-noted CBUL configuration information, including, for example, UL resources that can be used in contention-based UL transmission, and so on.

Furthermore, the control section 301 may control receipt of UL data according to the transmission format for contention-based UL transmission. Here, this transmission format may be comprised of an access channel for transmitting randomly-selected preambles, a control channel for transmitting control information for UL data, and a data channel for transmitting UL data.

For example, the control section 301 may detect UL transmissions based on the above preambles. Furthermore, the control section 301 may blind-decode UL control channels and identify the user terminals 20 based on the detected control information. Furthermore, the control section 301 may control the receiving process (demodulation, decoding, etc.) of UL data from the user terminals 20 in accordance with the above control information. Also, the control section 301 may control beam search and/or channel estimation, which are performed based on the above preambles.

Also, the control section 301 may control the configuration of multiple contention-based resource regions with different parameters (first aspect). To be more specific, for each contention-based resource region, the control section 301 may determine at least one of the number of time resources, the number of frequency resources, a parameter related to the number of repetitions, a parameter related to the transmission process, a parameter related to frequency hopping, a parameter related to preambles, resource group identification information, a parameter related to time and/or frequency locations, numerology, and a parameter related to retransmission control. In addition, the control section 301 may control the processes of generating and transmitting configuration information that indicates the determined result.

In addition, the control section 301 may control the on/off-state of contention-based resource regions (second aspect). To be more specific, the control section 301 may control, based on the volume of traffic in a non-contention-based resource region, signaling of off information, which turns off the use of the contention-based resource region, and/or on information, which turns on the use of the contention-based resource region. This signaling may be specific to the resource group including the contention-based resource region, may be specific to the cell, or may be specific to the user terminal 20.

The transmission signal generation section 302 generates DL signals (DL control channels, DL data channels, DL reference signals such as DM-RSs, and so on) based on commands from the control section 301 and outputs the DL signals to the mapping section 303. The transmission signal generation section 302 can be constituted by a signal generator, a signal generating circuit or signal generating apparatus that can be described based on general understanding of the technical field to which the present invention pertains.

The mapping section 303 maps the DL signals generated in the transmission signal generation section 302 to predetermined radio resources based on commands from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals are, for example, UL signals that are transmitted from the user terminals 20 (UL control channels, UL data channels, UL reference signals and so on). For the received signal processing section 304, a signal processor, a signal processing circuit or signal processing apparatus that can be described based on general understanding of the technical field to which the present invention pertains can be used.

The received signal processing section 304 outputs the decoded information acquired through the receiving processes to the control section 301. For example, the received signal processing section 304 outputs at least one of a preamble, control information and UL data to the control section 301. Also, the received signal processing section 304 outputs the received signals, the signals after the receiving processes and so on, to the measurement section 305.

The measurement section 305 conducts measurements with respect to the received signals. The measurement section 305 can be constituted by a measurer, a measurement circuit or measurement apparatus that can be described based on general understanding of the technical field to which the present invention pertains.

The measurement section 305 may measure the received power (for example, the RSRP (Reference Signal Received Power)), the received quality (for example, RSRQ (Reference Signal Received Quality)), channel states and so on of the received signals. The measurement results may be output to the control section 301.

### (User Terminal)

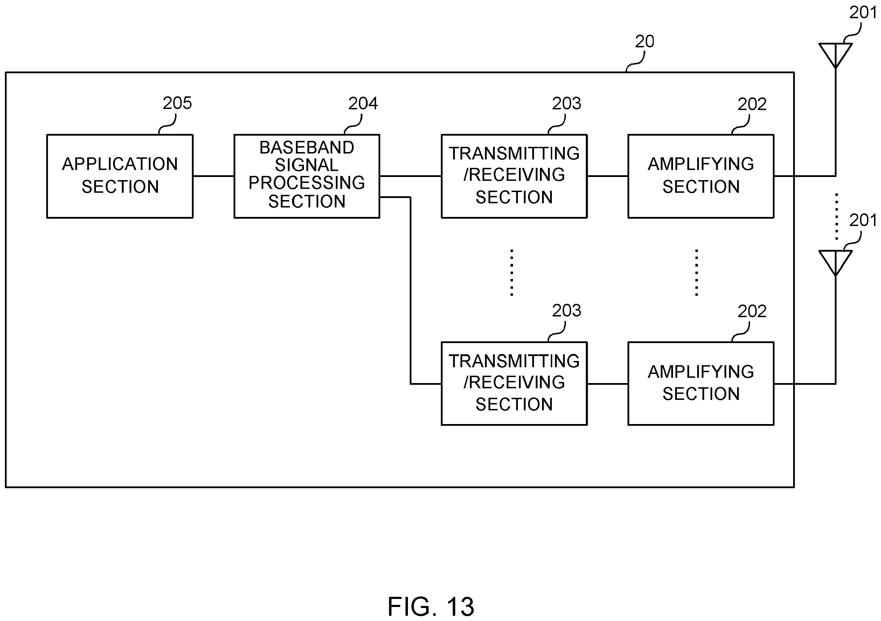

FIG. 13 is a diagram to show an example of an overall structure of a user terminal according to the present embodiment. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the DL signals amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field to which the present invention pertains. Note that a transmitting/receiving section 203 may be structured as a transmitting/receiving section in one entity, or may be constituted by a transmitting section and a receiving section.

In the baseband signal processing section 204, the baseband signal that is input is subjected to an FFT process, error correction decoding, a retransmission control receiving process, and so on. The DL data is forwarded to the application section 205. The application section 205 performs processes related to higher layers above the physical layer and the MAC layer, and so on. Also, in the DL data, the system information and the higher layer control information are also forwarded to the application section 205.

Meanwhile, the UL data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203. Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

Note that the transmitting/receiving sections 203 receive DL signals (for example, DL control signals (DL control channels), DL data signals (DL data channels, DL shared channels and so on), DL reference signals (DM-RS, CSI-RS and so on), discovery signals, synchronization signals, broadcast signals and so on), and transmit UL signals (for example, UL control signals (UL control channels), UL data signals (UL data channels, UL shared channels and so on), UL reference signals and so on).

To be more specific, the transmitting/receiving sections 203 receive configuration information related to contention-based UL transmission (CBUL configuration information) using system information or higher layer signaling. In addition, the transmitting/receiving sections 203 transmit UL signal (at least one of preambles, control information and UL data) based on the transmission format for contention-based UL transmission.

In addition, the transmitting/receiving section 203 receives configuration information related to a plurality of contention-based resource regions with varying parameters, in at least one of system information, higher layer signaling and a DL control channel. In the configuration information, at least one of the number of time resources, the number of frequency resources, a parameter related to the number of repetitions, a parameter related to the transmission process, a parameter related to frequency hopping, a parameter related to preambles, resource group identification information, a parameter related to time and/or frequency locations, numerology, and a parameter related to retransmission control may be included per contention-based resource region.

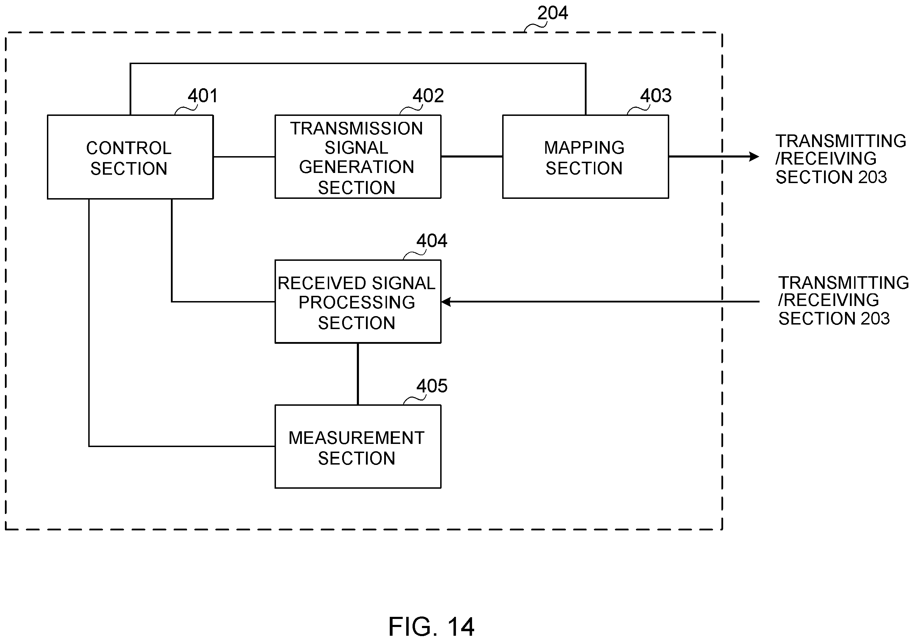

FIG. 14 is a diagram to show an example of a functional structure of a user terminal according to present embodiment. Note that, although FIG. 14 primarily shows functional blocks that pertain to characteristic parts of the present embodiment, the user terminal 20 has other functional blocks that are necessary for radio communication as well. As shown in FIG. 14, the baseband signal processing section 204 provided in the user terminal 20 at least has a control section 401, a transmission signal generation section 402, a mapping section 403, a received signal processing section 404 and a measurement section 405.

The control section 401 controls the whole of the user terminal 20. For the control section 401, a controller, a control circuit or control apparatus that can be described based on general understanding of the technical field to which the present invention pertains can be used.

The control section 401, for example, controls the generation of signals in the transmission signal generation section 402, the allocation of signals by the mapping section 403, and so on. Furthermore, the control section 401 controls the signal receiving processes in the received signal processing section 404, the measurements of signals in the measurement section 405, and so on.

The control section 401 acquires a DL control channel and a DL data channel transmitted from the radio base station 10 from the received signal processing section 404. To be more specific, the control section 401 controls the transmitting/receiving sections 203 and the received signal processing section 404 to blind-decode the DL control channel to detect DCI, and receive the DL data channel based on the DCI. In addition, the control section 401 estimates channel gain based on DL reference signals and demodulates the DL data channel based on the estimated channel gain.

The control section 401 may control transmission of retransmission control information (for example, HARQ-ACK, etc.) transmitted in a UL control channel or a UL data channel, based on the result of deciding whether or not retransmission control is necessary for the DL data channel, and so on. Furthermore, the control section 401 may control transmission of channel state information (CSI), which is generated based on DL reference signals.

In addition, the control section 401 controls contention-based UL transmission (CBUL). To be more specific, the control section 401 may control UL data transmission without UL grants, in accordance with the transmission format for contention-based UL transmission.

Furthermore, the control section 401 may determine the UL resource to use in contention-based UL transmission based on the above CBUL configuration information. This UL resource may be at least one of a time resource, a frequency resource, a resource group, a code resource, a power resource, and a space resource. Furthermore, the control section 401 may randomly select preambles from a plurality of preambles shown in the CBUL configuration information.

In addition, the control section 401 may control configurations of multiple contention-based resource regions, among which the above-described parameters vary (first aspect). To be more specific, the control section 401 may configure the above multiple contention-based resource regions by using system information (also referred to as "the MIB and/or SIBs," "broadcast information," etc.) or higher layer signaling (for example, RRC signaling or MAC signaling).

Alternatively, the control section 401 may determine these multiple contention-based resource regions based on DCI, which is communicated in L1/L2 control channels. Alternatively, the control section 401 may determine the multiple contention-based resource regions by combining system information or higher layer signaling, with DCI that is communicated in L1/L2 control channels.

Alternatively, the control section 401 may determine the multiple contention-based resource regions based on user terminal-specific parameters (for example, user terminal identification information such as C-RNTIs or S-TMSIs) or cell-specific parameters (for example, cell identification information such as physical cell IDs).

Also, the control section 401 may select at least one contention-based resource region from among the contention-based resource regions (first aspect). To be more specific, the user terminal may select at least one contention-based resource region to use to transmit UL data based on at least one of the size of the UL data, the state of the buffer, the received power of reference signals (RSRP), the received quality of reference signals (RSRQ), the above-described parameter related to the number of repetitions, the above-described parameters related to the transmission process, numerology, and a parameter related to retransmission control.

In addition, the control section 401 may control the on/off-state of a contention-based resource region (second aspect). To be more specific, when off information that turns off the use of a contention-based resource region is signaled, the control section 401 may hold UL data transmission, which uses this contention-based resource region. For example, when off information included in DCI is blind decoded by the DL control channel, the control section 401 may stop UL data transmission using the contention-based resource region based on the off information.

Also, when the off information is signaled at a predetermined timing before (or including) the contention-based resource region, the control section 401 stops UL data transmission using the contention-based resource region immediately after that. Also, when the off state is not signaled at the predetermined timing, the control section 401 may start UL data transmission using the contention-based resource region immediately after that (FIG. 8).

Also, after the above off information is signaled, until on information to turn on the use of the contention-based resource region is signaled, the control section 401 may stop transmission of UL data using the contention-based resource region (FIG. 9). Furthermore, after the on information is signaled, the control section 401 may start transmitting UL data using the contention-based resource region.

The transmission signal generation section 402 generates UL signals (UL control channels, UL data signals, UL reference signals and so on) based on commands from the control section 401, and outputs these signals to the mapping section 403. The transmission signal generation section 402 can be constituted by a signal generator, a signal generating circuit or signal generating apparatus that can be described based on general understanding of the technical field to which the present invention pertains.

Also, the transmission signal generation section 402 generates the UL data channel based on commands from the control section 401. For example, when a UL grant is included in a DL control channel that is reported from the radio base station 10, the control section 401 commands the transmission signal generation section 402 to generate the UL data channel.

The mapping section 403 maps the UL signals generated in the transmission signal generation section 402 to radio resources based on commands from the control section 401, and output the result to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding and so on) of received signals that are input from the transmitting/receiving sections 203. Here, the received signal include, for example, DL signals transmitted from the radio base station 10 (DL control channels, DL data channels, DL reference signals and so on). The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

Based on commands from control section 401, the received signal processing section 404 performs blind decoding of the DL control channel, which schedules transmission and/or reception of the DL data channel, and performs the receiving process of the DL data channel based on this DCI. In addition, the received signal processing section 404 estimates channel gain based on the DM-RS or the CRS, and demodulates the DL data channel based on the estimated channel gain.

The received signal processing section 404 outputs the decoded information, acquired through the receiving processes, to the control section 401. The received signal processing section 404 outputs, for example, broadcast information, system information, RRC signaling, DCI and so on, to the control section 401. The received signal processing section 404 may output the decoding result of the data to the control section 401. Also, the received signal processing section 404 outputs the received signals, the signals after the receiving processes and so on, to the measurement section 405.

The measurement section 405 conducts measurements with respect to the received signals. The measurement section 405 can be constituted by a measurer, a measurement circuit or measurement apparatus that can be described based on general understanding of the technical field to which the present invention pertains.

The measurement section 405 may measure, for example, the received power (for example, RSRP), the DL received quality (for example, RSRQ), channel states and so on of the received signals. The measurement results may be output to the control section 401.

### (Hardware Structure)

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire or wireless, for example) and using these multiple pieces of apparatus.

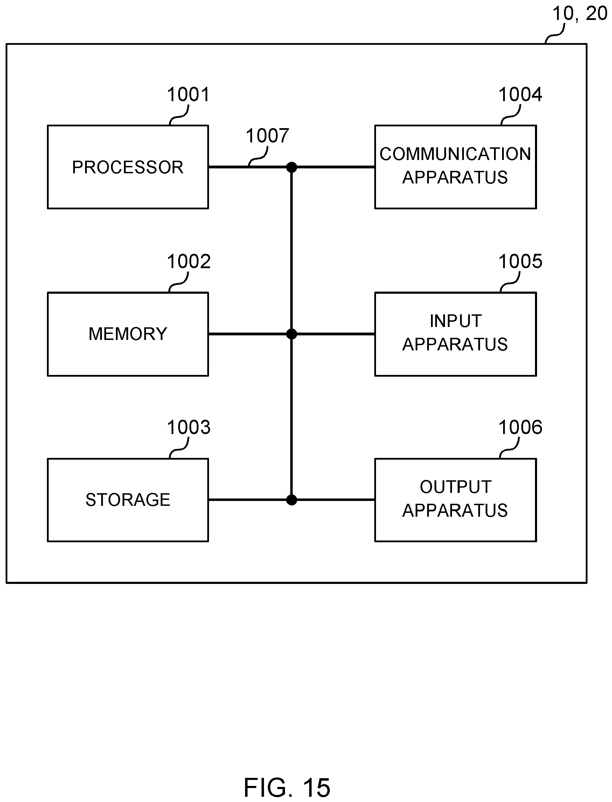

That is, a radio base station, a user terminal and so on according to an embodiment of the present invention may function as a computer that executes the processes of the radio communication method of the present invention. FIG. 15 is a diagram to show an example of a hardware structure of a radio base station and a user terminal according to the present embodiment. Physically, the above-described radio base stations 10 and user terminals 20 may be formed as a computer apparatus that includes a processor 1001, a memory 1002, a storage 1003, communication apparatus 1004, input apparatus 1005, output apparatus 1006And a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented in sequence, or in different manners, on two or more processors. Note that the processor 1001 may be implemented with one or more chips.

Each function of the radio base station 10 and the user terminal 20 is implemented by allowing predetermined software (programs) to be read on hardware such as the processor 1001 and the memory 1002, and by allowing the processor 1001 to do calculations, the communication apparatus 1004 to communicate, and the memory 1002 and the storage 1003 to read and/or write data.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules or data, from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory" (primary storage apparatus) and so on. The memory 1002 can store executable programs (program codes), software modules and/or the like for implementing the radio communication methods according to embodiments of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. The communication apparatus 1004 may be comprised of a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these types of apparatus, including the processor 1001, the memory 1002 and others, are connected by a bus 1007 for communicating information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals (or "signaling")." Also, "signals" may be "messages." A reference signal may be abbreviated as an "RS," and may be referred to as a "pilot," a "pilot signal" and so on, depending on which standard applies. Furthermore, a "component carrier" (CC) may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or more slots in the time domain. Furthermore, a slot may be comprised of one or more symbols in the time domain (OFDM (Orthogonal Frequency Division Multiplexing) symbols, SC-FDMA (Single Carrier Frequency Division Multiple Access) symbols, and so on).

A radio frame, a subframe, a slot and a symbol all represent the time unit in signal communication. A radio frames, a subframe, a slot and a symbol may be each called by other applicable names. For example, one subframe may be referred to as a "transmission time interval (TTI)," or a plurality of consecutive subframes may be referred to as a "TTI," and one slot may be referred to as a "TTI." That is, a subframe and a TTI may be a subframe (1 ms) in existing LTE, may be a shorter period than 1 ms (for example, one to thirteen symbols), or may be a longer period of time than 1 ms.

Here, a TTI refers to the minimum time unit of scheduling in radio communication, for example. For example, in LTE systems, a radio base station schedules the allocation of radio resources (such as the frequency bandwidth and transmission power that can be used by each user terminal) for each user terminal in TTI units. Note that the definition of TTIs is not limited to this. The TTI may be the transmission time unit of channel-encoded data packets (transport blocks), or may be the unit of processing in scheduling, link adaptation and so on.

A TTI having a time duration of 1 ms may be referred to as a "normal TTI" (TTI in LTE Rel. 8 to 12), a "long TTI," a "normal subframe," a "long subframe," and so on. A TTI that is shorter than a normal TTI may be referred to as a "shortened TTI," a "short TTI," a "shortened subframe," a "short subframe," or the like.

A resource block (RB) is the unit of resource allocation in the time domain and the frequency domain, and may include one or a plurality of consecutive subcarriers in the frequency domain. Also, an RB may include one or more symbols in the time domain, and may be one slot, one subframe or one TTI in length. One TTI and one subframe each may be comprised of one or more resource blocks. Note that an RB may be referred to as a "physical resource block (PRB (Physical RB))," a "PRB pair," an "RB pair," or the like.

Furthermore, a resource block may be comprised of one or more resource elements (REs). For example, one RE may be a radio resource region of one subcarrier and one symbol.

Note that the above-described structures of radio frames, subframes, slots, symbols and so on are merely examples. For example, configurations such as the number of subframes included in a radio frame, the number of slots included in a subframe, the number of symbols and RBs included in a slot, the number of subcarriers included in an RB, the number of symbols in a TTI, the symbol duration and the cyclic prefix (CP) length can be variously changed.

Also, the information and parameters described in this specification may be represented in absolute values or in relative values with respect to predetermined values, or may be represented in other information formats. For example, radio resources may be specified by predetermined indices. In addition, equations to use these parameters and so on may be used, apart from those explicitly disclosed in this specification.

The names used for parameters and so on in this specification are in no respect limiting. For example, since various channels (PUCCH (Physical Uplink Control Channel), PDCCH (Physical Downlink Control Channel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and output via a plurality of network nodes.

The information, signals and so on that are input may be transmitted to other pieces of apparatus. The information, signals and so on to be input and/or output can be overwritten, updated or appended. The information, signals and so on that are output may be deleted. The information, signals and so on that are input may be transmitted to other pieces of apparatus.

Reporting of information is by no means limited to the examples/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information" (L1/L2 control signals), "L1 control information" (L1 control signal) and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (by, for example, not reporting this piece of information).

Decisions may be made in values represented by one bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Certain actions which have been described in this specification to be performed by base station may, in some cases, be performed by upper nodes. In a network comprised of one or more network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The examples/embodiments illustrated in this specification may be used individually or in combinations, which may be switched depending on the mode of implementation. The order of processes, sequences, flowcharts and so on that have been used to describe the examples/embodiments herein may be re-ordered as long as inconsistencies do not arise. For example, although various methods have been illustrated in this specification with various components of steps in exemplary orders, the specific orders that are illustrated herein are by no means limiting.

Note that the radio communication system 1 may be applied to systems that use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (Global System for Mobile communications) (registered trademark), CDMA 2000, UMB (Ultra Mobile Broadband), IEEE 802.11 (Wi-Fi (registered trademark)), IEEE 802.16 (WiMAX(registered trademark)), IEEE 802.20, WB (Ultra-WideBand), Bluetooth (registered trademark) and other appropriate radio communication technologies, and/or may be applied to next-generation systems that are enhanced base on these radio communication technologies.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used only for convenience, as a method for distinguishing between two or more elements. In this way, reference to the first and second elements does not imply that only two elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination thereof. As used herein, two elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in the radio frequency, microwave and optical regions (both visible and invisible).

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

The disclosure of Japanese Patent Application No. 2016-096437, filed on May 12, 2016, including the specification, drawings and abstract, is incorporated herein by reference in its entirety.

## Claims

1. A user terminal comprising:
a transmission section that transmits UL data without an uplink (UL) grant from a radio base station; and
a control section that controls transmission of the UL data,
wherein the control section configures a plurality of resource regions with varying parameters, and selects a resource region to use to transmit the UL data from among the plurality of resource regions.

2. The user terminal according to claim 1, wherein at least one of the number of time resources, the number of frequency resources, a parameter related to the number of repetitions, a parameter related to a transmission process, a parameter related to frequency hopping, a parameter related to a preamble, resource group identification information, a parameter related to time and/or frequency locations, numerology, and a parameter related to retransmission control varies among the plurality of resource regions.

3. The user terminal according to claim 1 or claim 2, wherein, when off information to turn off the use of the resource region is signaled, the control section stops the transmission of the UL data using the resource region.

4. The user terminal according to claim 3, wherein, when the off information is not signaled at a predetermined timing before the resource region, or when on information to turn on the use of the resource region is signaled, the control section starts transmission of the UL data using the resource region.

5. The user terminal according to claim 3 or 4, wherein the signaling is specific to a resource group including the resource region, specific to a cell, or specific to the user terminal.

6. A radio communication method in a user terminal, comprising the steps of:
transmitting UL data without an uplink (UL) grant from a radio base station;
configuring a plurality of resource regions with varying parameters; and
selecting a resource region to use to transmit the UL data from among the plurality of resource regions.
